# EUROPEAN PATENT APPLICATION

(11) **EP 3 564 493 A1**
(43) Date of publication of application: **06.11.2019**
(21) Application number: 19166467.1
(22) Date of filing: 01.04.2019
(51) Int. Cl.: F01D 25/12, F01D 5/08, F04D 29/58, F04D 29/32

(54) **COOLING SYSTEM**

(30) Priority: 01.05.2018 GB 201807143
(71) Applicant: Rolls-Royce plc, London SW1E 6AT (GB)
(72) Inventor: Beecroft, Peter, Derby, Derbyshire DE24 8BJ (GB); Armstrong, Gareth, Derby, Derbyshire DE24 8BJ (GB); Koli, Bharat, Derby, Derbyshire DE24 8BJ (GB); Walker, Alastair, Derby, Derbyshire DE24 8BJ (GB)
(74) Representative: Rolls-Royce plc

(57) **Abstract**

The present disclosure relates to a compressor assembly for a gas turbine engine. The compressor assembly (101) comprises a compressor having a compressor stage with a plurality of rotor blades (102) mounted on the rim (103) of a rotor disc (104) within a core air flow path. There is a purge channel (112) extending from a radially inner purge gas source to at least one radially outer outlet at the rim of the compressor stage. The purge channel comprises at least one swirl element (112) and/or at least one orifice (130) for swirling/deflecting a purge gas flowing within the purge channel. In use, a flow of purge gas exits the outlet(s) (113) at least partly in the direction of the core air flow path.

## Description

### Field of the Invention

The present disclosure relates to a system and a method for cooling a compressor in a gas turbine engine.

### Background

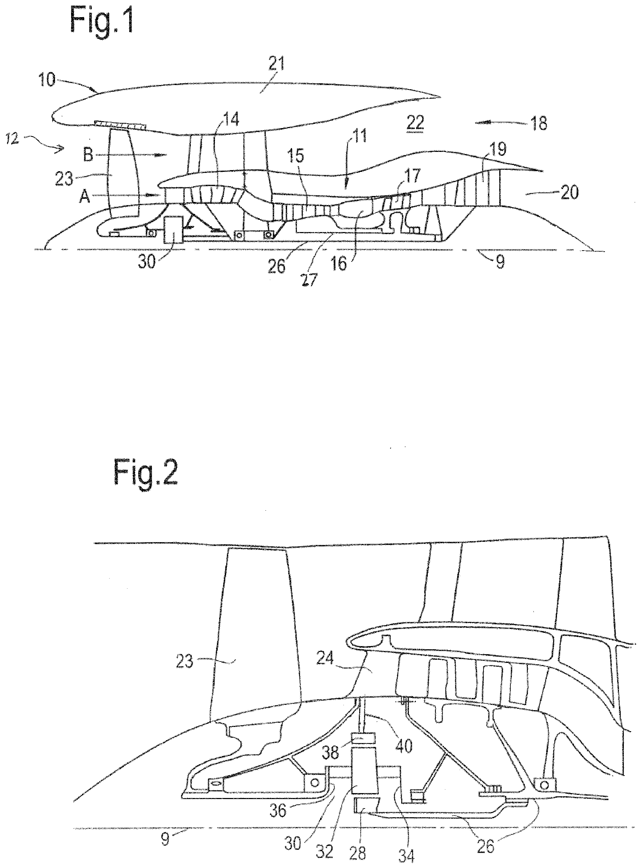

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

Each compressor 14, 15 comprises a bore and a rotor comprised of multiple stages extending between a first stage at an upstream end and a last stage at a downstream end. Each stage includes a rotor disk having a peripheral rim and multiple blades that are either integral with the rim of the rotor disk or affixed to the rim of the rotor disk, followed by multiple stator vanes attached to a stationary ring. The downstream end of the compressors are typically provided with a frustoconical wall depending from the rotor disk of the last stage. Adjacent and downstream from this in the high pressure compressor 15 are the outlet guide vanes (OGV) which direct the compressed air towards the combustor.

The act of compressing the core airflow A leads to an increase in air temperatures and in the later stages of the compressors 14, 15 this can have a detrimental effect on the components such as the rotor disks and blades.

One option to address this is to ventilate the later stages of the compressors 14, 15 in order to reduce local engine temperatures and prolong component life.

Air from the core airflow A can be diverted into an offtake and hence used to ventilate engine components.

### Summary

According to a first aspect there is provided a method of cooling a compressor stage of a gas turbine engine compressor, the compressor stage having a plurality of rotor blades mounted on the rim of a rotor disc within a core air flow path of the gas turbine engine, the method comprising providing a flow of purge gas along a purge channel from a radially inner purge gas source towards at least one radially outer outlet at the rim and into the core air flow path, wherein the purge channel comprises at least one swirl element and/or at least one orifice that swirls/deflects the purge gas to create circumferential motion in the flow of purge gas such that, at the outlet(s), the flow of purge gas enters the core flow path at least partly in the circumferential direction of the core airflow.

By flowing a purge gas along a purge channel having at least one swirl element and/or at least one orifice for deflecting/creating swirl in the purge gas, purge gas (which may be cooled) can be provided to cool the rim of the rotor disc thus reducing the local temperatures to reduce component damage/extend component life. This subsequently allows for higher overall pressure ratios and hence greater thermal efficiency with related fuel burn improvements. The swirl/deflection induced in the purge gas creates circumferential motion in the purge flow which helps minimise any turbulence in the core air flow path (which can negatively impact engine performance by increasing pressure losses) because the flow of purge gas will have a component (e.g. a major component) moving in the circumferential (and optionally downstream) direction with the core flow as it exits the purge channel at the outlet(s).

In some embodiments, the swirl element or orifice(s) is/are adapted to introduce a swirl greater than 60% of the bulk swirl of the core flow. This helps minimise the impact of the flow of purge gas on the core flow.

The method may comprise creating swirl in the flow of purge gas using one or more static or a rotatable swirler vane(s) (e.g. a plurality of circumferentially spaced vanes) mounted in the purge channel.

The method may comprise creating swirl in the flow of purge gas using one or more nozzles e.g. one or more pre-swirl nozzles mounted in the purge channel. The nozzles may be circumferentially spaced.

The method may comprise creating swirl/deflecting the flow of purge gas using one or more orifices (e.g. a plurality of circumferentially spaced orifices) extending through the rim of the rotor disc. The orifice(s) will create circumferential swirl as the purge gas is forced to rotate at the same speed as the rotor disc about the engine axis. The flow of purge gas will continue to rotate at this speed as it exits into the core air flow.

Each of the plurality of rotor blades in the compressor stage comprises an aerofoil extending radially from a blade platform (i.e. from a radially outer surface of the blade platform). The blade platforms are circumferentially arranged with each platform having an upstream edge and a downstream edge spaced by opposing (circumferentially spaced) edges comprising a pressure surface edge and suction surface edge. The method may comprise deflecting the flow of purge gas using a plurality of orifices each extending through the rim of the rotor disc and through one of the plurality of blade platforms with the outlets provided on the radially outer surfaces of the blade platforms.

In some embodiments, the method comprises deflecting the purge gas within an outlet portion of each orifice extending to its respective outlet wherein the outlet portion(s) is/are angled towards the circumferential (and preferably downstream) direction of the core air flow.

In some embodiments, the method further comprises flowing purge gas from the purge channel through a bore in the rotor disc (e.g. in the rim of the rotor disc) and into an inter-disc cavity between the compressor stage and an adjacent upstream compressor stage to effect cooling of the inter-disc cavity.

The compressor stage will form part of a compressor. In some embodiments, the compressor comprises a plurality of compressor stages extending in a downstream direction from a first upstream stage to a last downstream stage and the method is for cooling the last stage. The compressor may further comprise a drive cone depending from the last stage of the compressor and the method may comprise flowing a purge gas through a purge channel at least partly defined by the drive cone.

In some embodiments, the method further comprises flowing purge gas from the purge channel through a bore in the drive cone and into a drive cone cavity between the drive cone and the last compressor stage to effect cooling of the drive cone cavity.

The compressor assembly may further comprise a plurality of outlet guide vanes positioned downstream of the last stage, the outlet guide vanes being mounted on a mounting ring supported by a casing structure. The method may comprise flowing a purge gas through a purge channel defined by the drive cone and the casing structure.

The method may comprise flowing the purge gas from an outlet provided between the last stage and the mounting ring into the core flow path.

According to a second aspect there is provided a compressor assembly for a gas turbine engine, the compressor assembly comprising:
a compressor having a compressor stage with a plurality of rotor blades mounted on the rim of a rotor disc within a core air flow path; and
a purge channel extending from a radially inner purge gas source to at least one radially outer outlet at the rim of the compressor stage;
wherein the purge channel comprises at least one swirl element and/or at least one orifice for creating circumferential swirl/deflection in a purge gas flowing within the purge channel such that, in use, a flow of purge gas exits the outlet(s) at least partly in the circumferential direction of the core airflow path.

In use the swirl element(s)/orifice(s) ensure(s) that the cooling purge gas enters the core air flow path at least partly in the circumferential (and preferably downstream) direction of the core air flow thus minimising any resulting disturbance in the core air flow path.

The at least one swirl element may comprise one or more static or rotatable swirler vanes (e.g. a plurality of circumferentially mounted swirler vanes) mounted in the purge channel.

The at least one swirl element may comprise one or more nozzles e.g. one or more pre-swirl nozzles (e.g. a plurality of circumferentially spaced nozzles) mounted in the purge channel.

In some embodiments, the compressor comprises a plurality of compressor stages extending in a downstream direction from a first upstream stage to a last downstream stage, each compressor stage having a plurality of rotor blades provided on the rim of a rotor disc, the compressor further comprising a drive cone depending from the last stage of the compressor. The purge channel may be at least partly defined by the drive cone.

In some embodiments, the compressor assembly further comprises a plurality of outlet guide vanes positioned downstream of the last stage, the outlet guide vanes being mounted on a mounting ring supported by a casing structure. The purge channel may extend between the drive cone and the casing structure. The outlet(s) may be provided between the last stage and the mounting ring. There may be a plurality of circumferentially spaced outlets.

The at least one swirl element may be mounted in the purge channel proximal a join between the drive cone and the last stage. For example, the last stage may comprise an axially- and circumferentially extending annular flange having an end surface in abutment with an opposing end surface of the drive cone and the at least one swirl element may be mounted at least partly on the axially- and circumferentially-extending annular flange of the last stage. The at least one swirl element may be mounted in abutment with or connected to the rim of the last stage.

The drive cone may also comprise an axially- and circumferentially extending flange providing the opposing surface in abutment with the end surface of the annular flange of the last stage. The at least one swirl element may be mounted at least partly on the axially- and circumferentially-extending annular flange of the drive cone, i.e. the at least one swirl element may be mounted on the axially- and circumferentially-extending annular flange(s) of the drive cone and/or the rim of the last stage.

The last stage (e.g. the annular flanges of the last stage and the drive cone) and the mounting ring may define a circumferentially extending annular chamber which forms a radially outer end portion of the purge channel adjacent the outlet(s). The at least one swirl element may be provided in this annular chamber

The at least one swirl element may extend radially within the annular chamber between the annular flange(s) of the last stage and/or the drive cone, and the mounting ring of the outlet guide vanes. For example, the mounting ring may be adapted to form a seal with the vanes or nozzles of the swirl element.

The at least one swirl element may be mounted in the purge channel on the drive cone.

The compressor assembly may further comprise a secondary casing structure at least partly lining the purge channel. For example, the module may comprise a secondary casing structure lining the drive cone. It may additionally or alternatively comprise an extension depending from the mounting ring to the casing structure within the annular chamber. This extension may form a seal with the vanes/nozzles of the at least one swirl element.

Each of the plurality of rotor blades comprises an aerofoil extending radially from a blade platform, the blade platforms each being circumferentially mounted on (by a respective root portion) or integral with the rim of the rotor disc (in which case the rotor disc is termed a "blisk"). Each platform has an upstream edge and a downstream edge. In the last stage, the downstream edges may face (or define) the outlet of the purge channel.

In some embodiments, the at least one swirl element may be provided at the outlet(s). For example, the at least one swirl elements may be provided on one or more of the blade platforms at the outlet of the purge channel i.e. on the downstream edges of one or more of the blade platforms (proximal the trailing edges of the blades). Swirl elements may be provided on all of the blade platforms in the last stage.

The blade platforms may each have an angled downstream edge, the edge extending between opposing circumferentially spaced edges, the opposing circumferentially spaced edges comprising a pressure surface edge (proximal the pressure surface of the aerofoil) and a suction surface edge (proximal the suction surface of the aerofoil). The pressure surface edge may be axially shorter than the suction surface edge such that the downstream edge extends obliquely from the pressure surface edge to the suction surface edge. The swirl element(s) may be provided proximal or at the suction surface edge(s) of the platform(s).

In some embodiments, the rotor disc (e.g. the rim of the rotor disc) comprises at least one bore in fluid communication with the purge channel extending from an axially downstream surface of the disc/rim (e.g. within the annular chamber) to an axially upstream surface of the disc. Purge gas from the purge channel can flow through the bore into an inter-disc cavity defined by the axially upstream surface of the rotor disc and the rotor disc of an adjacent upstream compressor stage to effect cooling of the inter-disc cavity.

In some embodiments, the drive cone comprises at least one bore in fluid communication with the purge channel extending from an axially downstream surface of the drive cone to an axially upstream surface of the drive cone. Purge gas from the purge channel can flow through the bore into a drive cone cavity defined by the axially upstream surface of the drive cone and the rotor disc of the last stage to effect cooling of the drive cone cavity.

As discussed above, each of the plurality of rotor blades in the compressor stage (e.g. the last compressor stage) comprises an aerofoil extending radially from a blade platform (i.e. from a radially outer surface of the blade platform). The blade platforms are circumferentially arranged with each platform having an upstream edge and a downstream edge spaced by the opposing (circumferentially spaced) pressure surface edge and suction surface edge.

In some embodiments, the at least one orifice (e.g. the plurality of circumferentially spaced orifices) for deflecting/creating swirl in the purge gas is/are provided in the rim of the rotor disc and the outlet(s) is/are provided on the radially outer surface of the blade platform(s). The orifice(s) deflects and swirls the purge gas through the rim of the disc such that the flow of purge gas exits the outlet(s) at least partly (preferably with a major component of the flow) in the direction of the core air flow.

The orifice(s) extends through the rim from a respective inlet which may be in the annular chamber defined by the last stage (e.g. the annular flanges of the last stage and the drive cone) and the mounting ring.

In some embodiments, the or each orifice has a circular transverse cross-section and the outlet is a circular aperture. In some embodiments, the or each orifice has an elliptical transverse cross section and the outlet is an elliptical aperture. In some embodiments, the or each orifice has a slotted transverse cross section and the outlet is a slotted aperture.

In some embodiments, the outlet on the or each blade platform is proximal the suction surface of the aerofoil. In some embodiments, the outlet on the or each blade platform is proximal the pressure surface. In some embodiments, the outlet on the or each blade platform is proximal the downstream edge of the blade platform e.g. proximal the suction surface and closer to the downstream edge than the upstream edge of the blade platform.

In embodiments where the orifice is a slotted orifice, the slotted outlet may be parallel to any one of the upstream edge, downstream edge, pressure surface edge or suction surface edge.

In some embodiments, the outlet may be provided at a join between the suction surface edge of a first blade platform and the opposing pressure surface edge of the adjacent, second blade platform. The outlet may be partly defined by the first blade platform and partly defined by the second blade platform.

In some embodiments, the or each orifice comprises an outlet portion extending to the respective outlet wherein the outlet portion of the orifice is angled towards the direction of the core air flow. The outlet portion may be linear, bent or curved.

In a third aspect, there is provided a rotor blade comprising an aerofoil extending radially from a blade platform having an upstream edge and an axially opposing downstream edge, wherein the downstream edge comprises a swirl vane.

The blade platform may have an angled downstream edge, the edge extending between opposing circumferentially spaced edges. The opposing circumferentially spaced edges comprise a pressure surface edge (proximal the pressure surface of the aerofoil) and a suction surface edge (proximal the suction surface of the aerofoil). The pressure surface edge may be axially shorter than the suction surface edge such that the downstream edge extends obliquely from the pressure surface edge to the suction surface edge. The swirl vane may be provided proximal or at the suction surface edge of the platform.

In a fourth aspect, there is provided a gas turbine engine comprising a compressor assembly according to the second aspect or a rotor blade according to the third aspect. The compressor may be a high pressure compressor.

Accordingly, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Brief Description of the Drawings

Embodiments will now be described by way of example only, with reference to the Figures, in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine;
Figure 4 is a sectional view of a first embodiment;
Figure 5 is a sectional view of a second embodiment;
Figure 6 is a sectional view of a third embodiment;
Figure 7 is a sectional view of a fourth embodiment;
Figure 8 is a sectional view of a fifth embodiment;
Figure 9 is a sectional view of a sixth embodiment;
Figures 10A and 10B are plan views of the blade platforms of the sixth embodiment;
Figure 11 is a sectional view of a seventh embodiment;
Figure 12 is a sectional view of an eighth embodiment;
Figures 13A - L are plan views of the blade platforms of the seventh or eighth embodiments;
Figures 14A - D are sectional views through the orifices of the seventh or eighth embodiments; and
Figure 15 is a sectional view of a ninth embodiment.

### Detailed Description and Further Optional Features

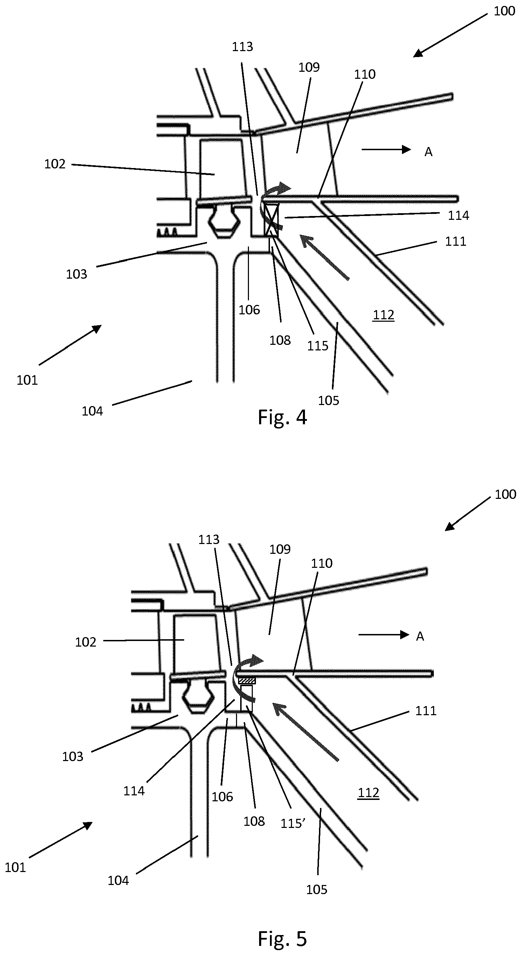

Figure 4 shows a first embodiment of a compressor assembly 100 for a gas turbine engine. The compressor assembly comprises a compressor having a plurality of compressor stages extending in a downstream direction from a first upstream stage (not shown) to a last downstream stage 101. The last compressor stage 101 has a plurality of rotor blades 102 mounted on the rim 103 of a rotor disc 104 within a core air flow path A of the gas turbine engine. The compressor further comprises a drive cone 105 depending from the last stage 101 of the compressor.

The last stage 101 comprises an axially- and circumferentially extending annular flange 106 having an end surface 107 in abutment with an opposing end surface of the drive cone 105. The opposing end surface of the drive cone 105 is provided on an axially- and circumferentially extending drive cone flange 108.

The compressor assembly 101 further comprises a plurality of outlet guide vanes 109 positioned downstream of the last stage 101. The outlet guide vanes 109 are mounted on a mounting ring 110 supported by a casing structure 111.

The compressor assembly 101 further comprises a purge channel 112 extending from a radially inner purge gas source (not shown) to a radially outer outlet 113 at the rim 103 of the last stage 101. The outlet 113 is provided between the rim 103 and the mounting ring 110. The purge channel 112 is an annular channel and the outlet 113 is an annular aperture.

The purge channel 112 is defined by the drive cone 105 and the casing structure 111 supporting the mounting ring 110 of the outlet guide vanes 109. The mounting ring 110 and the annular flange 106 of the last stage 101 and the annular flange 108 of the drive cone 108 define a circumferentially extending annular chamber 114 which forms a radially outer end portion of the purge channel 112 adjacent the outlet 113.

The compressor assembly 101 comprises a swirl element 115 comprising a plurality of circumferentially spaced static swirler vanes. Each swirler vane has a curved profile with a difference in inlet and outlet angle, the difference in angle being selected to increase swirl. The swirl element 115 is mounted within the annular chamber 114 at the join between the annular flange 106 of the last stage 101 and the annular flange 108 of the drive cone 105.

As purge gas (e.g. cooled air) flows up the purge channel 112 and through the swirl element 115, circumferential swirl is imparted to the purge gas flow by the swirler vanes such that a flow of purge gas exits the outlet 113 with a major component of the flow being in the circumferential and downstream direction of the core airflow.

The purge gas cools the rim 103 of the rotor disc 104 in the last stage 101 thus reducing the local temperatures to reduce component damage/extend component life. This subsequently allows for higher overall pressure ratios and hence greater thermal efficiency with related fuel burn improvements. The circumferential swirl induced in the purge gas by the swirl element 115 helps minimise any disturbance in the core air flow path A (which can negatively impact engine performance by increasing pressure losses).

Figure 5 shows a second embodiment which is similar to the first embodiment except that the swirl element 115' comprises a plurality of circumferentially-spaced rotating swirler vanes mounted in the annular chamber 114 between the flanges 106, 108 and the mounting ring 110. The mounting ring 110 profile is modified (in the shaded area in Figure 5) to create a seal with the vanes of the swirl element 115'. Similar to the first embodiment, the vanes have a curved profile with a difference in inlet and outlet angle but instead of being static, they rotate about the engine axis.

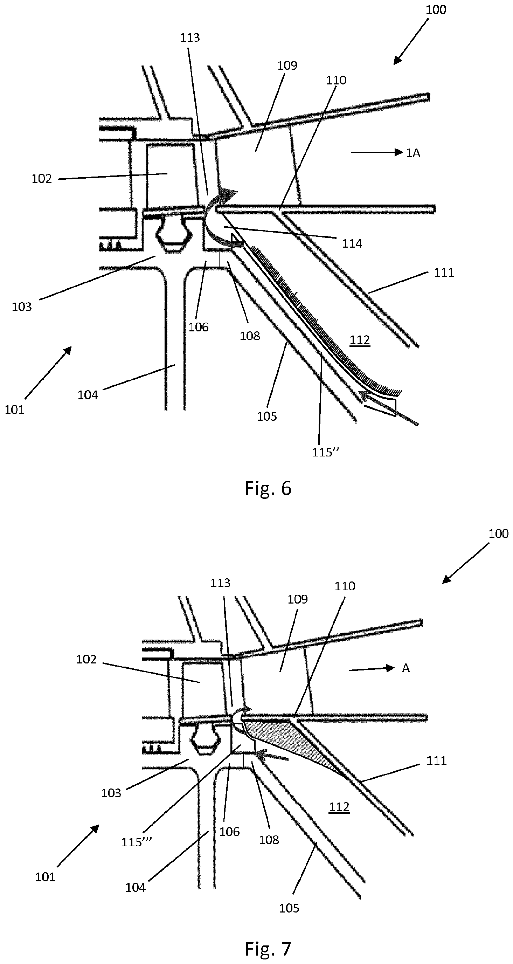

Figure 6 shows a third embodiment which is similar to the first and second embodiments except that the swirl element 115" comprises a plurality of swirler vanes mounted on the drive cone 105 which rotate about the engine axis. The vanes are similar to those found on a centrifugal/radial compressor.

Figure 7 shows a fourth embodiment which is similar to the first embodiment except that the swirl element 115'" comprises a plurality of static swirler vanes mounted on the rim 103 of the rotor disc 104. The mounting ring 110 profile is modified (in the shaded area in Figure 7) to create a seal with the vanes of the swirl element 115'".

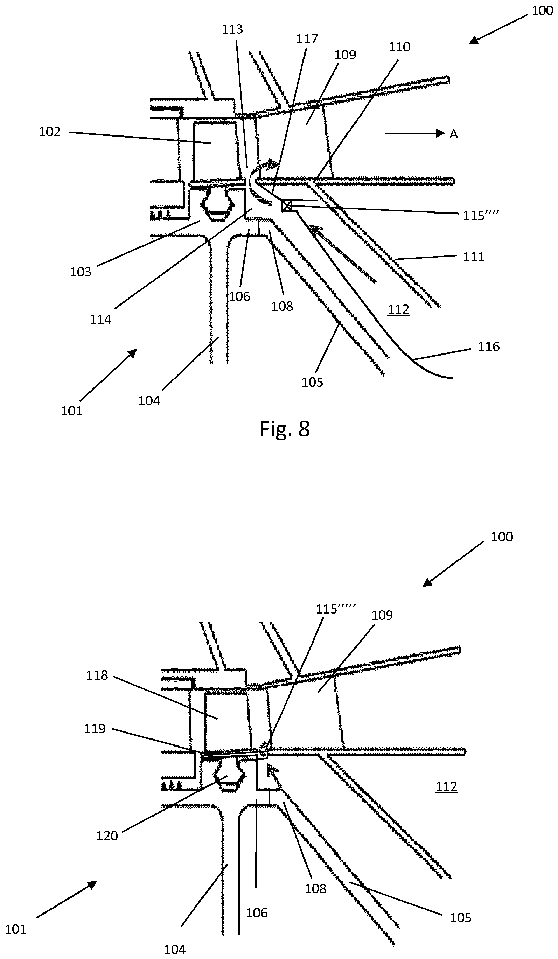

Figure 8 shows a sixth embodiment which is similar to the previous embodiments except that the swirl element 115"" comprises a plurality of circumferentially spaced pre-swirl nozzles mounted on the annular flange 108 of the drive cone 105. In order to channel the purge gas through the nozzles, the compressor assembly further comprise a secondary casing structure having a first portion 116 lining the drive cone 105. It also comprises a second portion 117 depending from the mounting ring 110 to the casing structure 111 within the annular chamber 114. In other embodiments, the second portion 117 may be omitted and the profile of the mounting ring 110 may be modified to form a seal with swirl element 115"".

In all of the embodiments shown, each of the plurality of rotor blades 102 comprises an aerofoil 118 extending radially from a blade platform 119. The blade platforms 119 are circumferentially mounted on the rim 103 of the rotor disc 104 (by a respective root portion 120). Each platform 119 has an upstream edge 121 and a downstream edge 122. In the last stage 101, the downstream edges 122 define the outlet 113 of the purge channel 112.

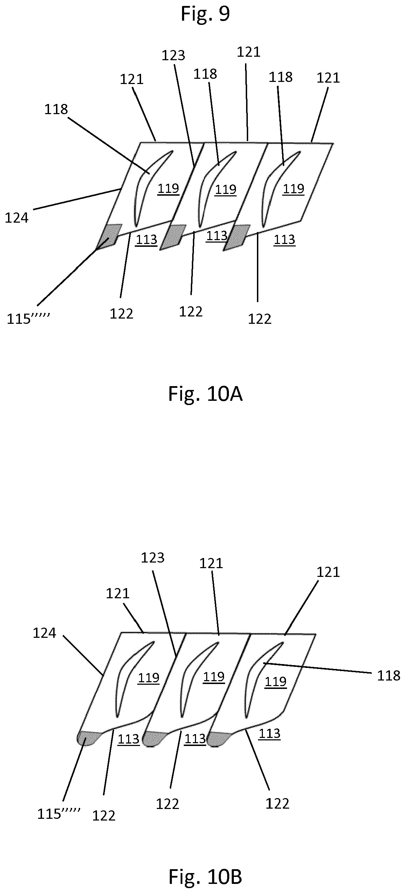

Figures 9, 10A and 10B show a seventh embodiment in which the swirl element 115""' comprises a plurality of swirler vanes mounted on the blade platforms 119.

The blade platforms 119 each have an angled downstream edge 122, the edge extending between opposing circumferentially spaced edges. The opposing circumferentially spaced edges comprise a pressure surface edge 123 (proximal the pressure surface of the aerofoil) and a suction surface edge 124 (proximal the suction surface of the aerofoil). The pressure surface edge 123 is axially shorter than the suction surface edge 124 such that the downstream edge 122 extends obliquely from the pressure surface edge 123 to the suction surface edge 124. The swirl elements 115""' (vanes) are provided on the downstream edge 122 at the corner with the suction surface edge 124 of each platform 119.

The swirl elements 115""' (vanes) may have an oblique linear downstream edge 125 as shown in Figure 10A or they may have a rounded downstream edge 125 as shown in Figure 10B.

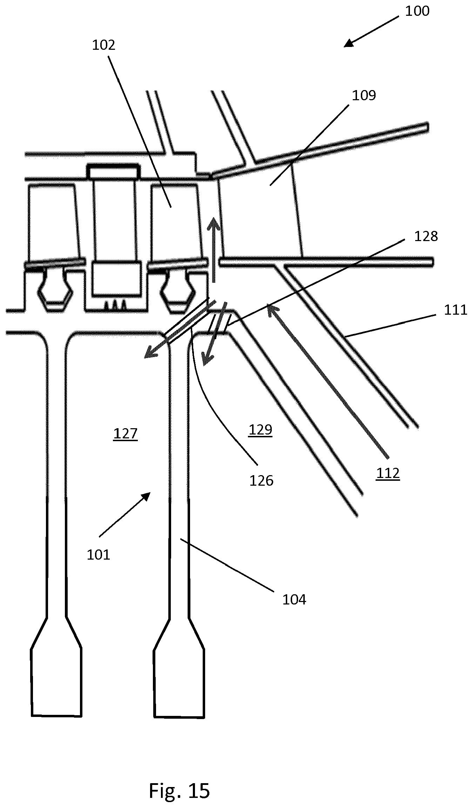

Figure 15 shows a modification that could be made to the any of the preceding embodiments. The rim 103 of the rotor disc 104 comprises a first bore 126 in fluid communication with the purge channel 112 extending from an axially downstream surface of the rim 103 within the annular chamber 114 to an axially upstream surface of the disc 104. Purge gas from the purge channel 112 can flow through the bore 126 into an inter-disc cavity 127 defined by the axially upstream surface of the rotor disc 104 and the rotor disc 104 of an adjacent upstream compressor stage to effect cooling of the inter-disc cavity.

The drive cone 105 also comprises a second bore 128 in fluid communication with the purge channel 112 extending from an axially downstream surface of the drive cone 105 within the purge channel to an axially upstream surface of the drive cone 105. Purge gas from the purge channel 112 can flow through the bore 128 into a drive cone cavity 129 defined by the axially upstream surface of the drive cone 105 and the rotor disc 104 of the last stage 101 to effect cooling of the drive cone cavity 128.

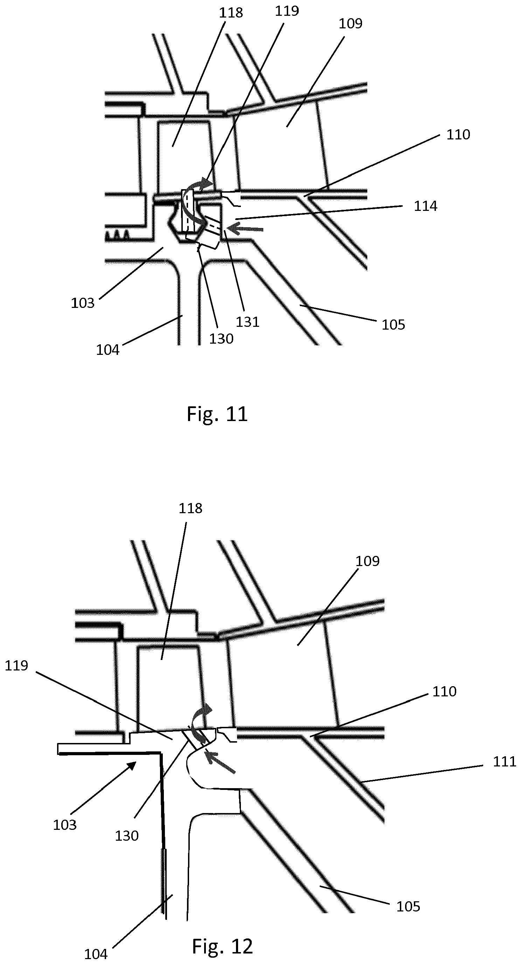

Figures 11 and 12 show an eighth and ninth embodiment respectively in which swirl is created in the purge gas using a plurality of circumferentially spaced orifices 130 extending through the rim 103 of the rotor disc 104 and the blade platforms 119. In these embodiments, the outlets 113 are provided on the radially outer surface of the blade platforms.

In the embodiment shown in Figure 11, the orifices 130 extend through the rim 103 from a respective inlet 131 which is in the annular chamber 114.

In the embodiment shown in Figure 12, the blades 102 and blade platforms are integral with the rim 103 of the rotor disc 104 to form a "blisk".

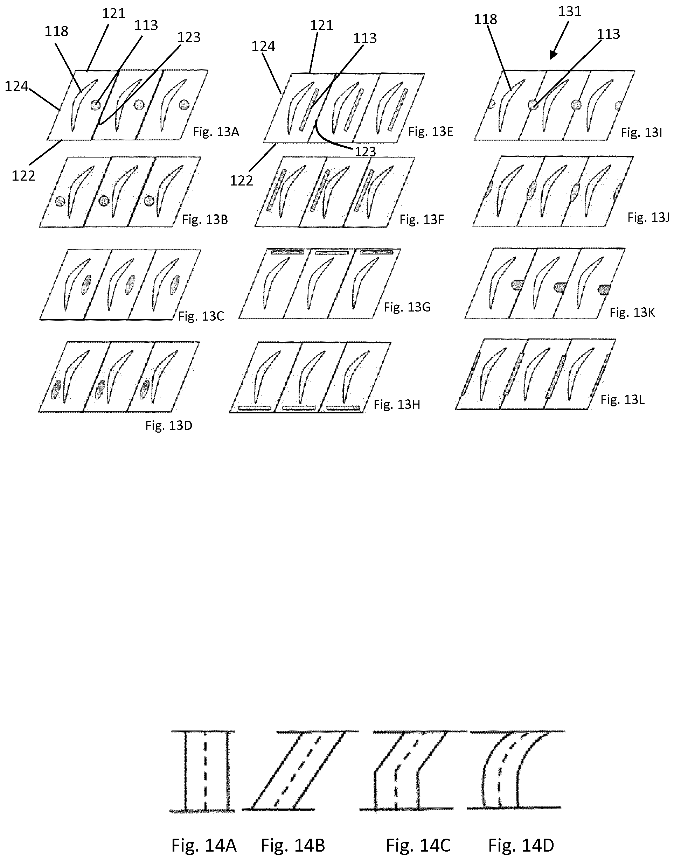

As shown in Figures 13A, 13B and 13I, the orifices may have a circular transverse cross section and each outlet 113 is a circular aperture.

As shown in Figures 13C, 13D and 13J, the orifices may have an elliptical transverse cross section and each outlet 113 is an elliptical aperture.

As shown in Figures 13E-13H and 13L, the orifices may have a slotted (elongated) transverse cross section and each outlet 113 is a slotted aperture. The slotted orifices 113 may be parallel to any one of the upstream edge 121 (as shown in Figure 13G), downstream edge 122 (as shown in Figure 13H), pressure surface edge 123 (as shown in Figure 13E) or suction surface edge 124 (as shown in Figure 13F).

The outlets 113 may be proximal the suction surface 124 of the aerofoil 118 as shown in Figures 13B, 13D and 13F.

The outlets 113 may be proximal the pressure surface 123 of the aerofoil 118 as shown in Figures 13A, 13C and 13E.

The outlets 113 may be proximal the downstream edge 123 of the blade platform 119 as shown in Figures 13B, 13D and 13H.

In embodiments shown in Figures 13I to 13L, the outlets 113 may be provided a join 131 between the suction surface edge 124 of a first blade platform 119A and the opposing pressure surface edge 123 of the adjacent, second blade platform 119B. The outlets 113 are partly defined by the first blade platform 119A and partly defined by the second blade platform 119B. These embodiments will result in a purge flow at the outlets 113 that has minimal interaction with the aerofoil 118 aerodynamics.

As shown in Figures 14A-14D, the or each orifice 113 comprises an outlet portion 133 extending to the respective outlet 113. The outlet portion 133 of the orifice 130 may be angled towards the direction of the core air flow A. The outlet portion 133 may be linear (Figure 14B), bent (Figure 14C) or curved (Figure 14D).

The orifices 130 deflects and creates swirl in the purge gas through the rim 103 of the rotor disc 104 and blade platforms 119 such that the flow of purge gas exits the outlet with a major component in the direction of the core air flow A.

The compressor assemblies described above are for use in a gas turbine engine such as that shown in Figure 1 and discussed above.

Such a gas turbine engine 10 may comprise an engine core 11 comprising at least one turbine 17, 19, a combustor 16, at least one compressor 14, 15 which each comprise a compressor assembly as described above, and a core shaft 26. Such a gas turbine engine may comprise a fan 23 (having fan blades) located upstream of the engine core 11.

Arrangements of the present disclosure may be particularly, although not exclusively, beneficial for fans 23 that are driven via a gearbox 30. Accordingly, the gas turbine engine may comprise a gearbox 30 that receives an input from the core shaft 26 and outputs drive to the fan 23 so as to drive the fan 23 at a lower rotational speed than the core shaft 26. The input to the gearbox 30 may be directly from the core shaft 26, or indirectly from the core shaft 26, for example via a spur shaft and/or gear.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

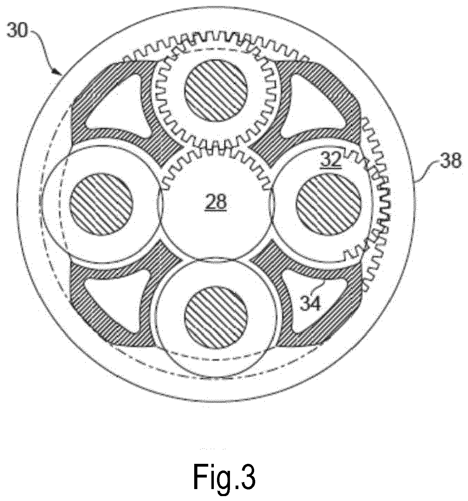

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A method of cooling a compressor stage of a gas turbine engine compressor, the compressor stage having a plurality of rotor blades mounted on the rim of a rotor disc within a core air flow path of the gas turbine engine, the method comprising providing a flow of purge gas along a purge channel from a radially inner purge gas source towards at least one radially outer outlet at the rim and into the core air flow path, wherein the purge channel comprises at least one swirl element and/or at least one orifice that swirls/deflects the purge gas to create circumferential motion in the flow of purge gas such that, at the outlet(s), the flow of purge gas enters the core flow path at least partly in the circumferential direction of the core airflow.

2. A method according to claim 1 wherein the at least one swirl element and/or at least one orifice swirls/deflects the purge gas to create motion in the flow of purge gas such that, at the outlet(s), the flow of purge gas enters the core flow path at least partly in the downstream direction of the core airflow.

3. The method of claim 1 or 2 comprising:
creating swirl in the flow of purge gas using one or more static or a rotatable swirler vane(s) mounted in the purge channel; and/or
creating swirl in the flow of purge gas using one or more nozzles mounted in the purge channel.

4. The method of claim 1 or 2 comprising creating swirl in the flow of purge gas using one or more orifices extending through the rim of the rotor disc.

5. The method of claim 4 wherein:
each of the plurality of rotor blades in the compressor stage comprises an aerofoil extending radially from a radially outer surface of a blade platform and wherein the method comprises deflecting the flow of purge gas using a plurality of orifices, each orifice extending through the rim of the rotor disc and through one of the plurality of blade platforms with the outlets provided on the radially outer surfaces of the blade platforms; and
optionally, the method comprises creating swirl in the purge gas within an outlet portion of each orifice extending to its respective outlet wherein the outlet portion(s) is/are angled towards the direction of the core air flow.

6. A method according to any one of the preceding claims further comprising:
flowing purge gas from the purge channel through a bore in the rotor disc and into an inter-disc cavity between the compressor stage and an adjacent upstream compressor stage; and/or
flowing purge gas from the purge channel through a bore in a drive cone extending from the rotor disc and into a drive cone cavity between the drive cone and the compressor stage.

7. A compressor assembly for a gas turbine engine, the compressor assembly comprising:
a compressor having a compressor stage with a plurality of rotor blades mounted on the rim of a rotor disc within a core air flow path; and
a purge channel extending from a radially inner purge gas source to at least one radially outer outlet at the rim of the compressor stage;
wherein the purge channel comprises at least one swirl element and/or at least one orifice for creating circumferential swirl/deflection in a purge gas flowing within the purge channel such that, in use, a flow of purge gas exits the outlet(s) at least partly in the circumferential direction of the core air flow path.

8. A compressor according to claim 7 wherein:
the at least one swirl element and/or at least one orifice is for creating swirl/deflection in the purge such that, in use, a flow of purge gas exits the outlet(s) at least partly in the downstream direction of the core air flow path; and/or
the at least one swirl element comprises one or more static or rotatable swirler vane mounted in the purge channel.

9. A compressor assembly according to claim 7 or 8 wherein the at least one swirl element comprises one or more nozzle mounted in the purge channel.

10. A compressor assembly according to any one of claims 7 to 9 wherein:
the compressor comprises a plurality of compressor stages extending in a downstream direction from a first upstream stage to a last downstream stage, each compressor stage having a plurality of rotor blades provided on the rim of a rotor disc, the compressor further comprising a drive cone depending from the last stage of the compressor, and wherein the purge channel is at least partly defined by the drive cone; and
optionally, the compressor assembly further comprises a plurality of outlet guide vanes positioned downstream of the last stage, the outlet guide vanes being mounted on a mounting ring supported by a casing structure, and wherein the purge channel extends between the drive cone and the casing structure, the outlet(s) being provided between the last stage and the mounting ring.

11. A compressor assembly according to claim 10 wherein the drive cone comprises a bore in fluid communication with the purge channel extending from an axially downstream surface of the drive cone to an axially upstream surface of the drive cone, and, optionally, the at least one swirl element is mounted in the purge channel proximal a join between the drive cone and the last stage.

12. A compressor assembly according to any one of claims 7 to 11 wherein:
each of the plurality of rotor blades comprises an aerofoil extending radially from a blade platform, each platform having an upstream edge and a downstream edge, and wherein the at least one swirl element is provided on one or more of the downstream edges of the blade platforms; or
each of the plurality of rotor blades comprises an aerofoil extending radially from a blade platform, each platform having an upstream edge and a downstream edge, and wherein a plurality of orifices for deflecting/creating swirl in the purge gas is provided in the rim of the rotor disc and the outlets are provided on the radially outer surface of the blade platform.

13. A compressor assembly according to any one of claims 7 to 12 wherein the rotor disc comprises a bore in fluid communication with the purge channel extending from an axially downstream surface of the disc to an axially upstream surface of the disc.

14. A rotor blade comprising an aerofoil extending radially from a blade platform having an upstream edge and an axially opposing downstream edge, wherein the downstream edge comprises a swirl vane, wherein, optionally:
the blade platform has an angled downstream edge, extending between a pressure surface edge and an opposing circumferentially spaced suction surface edge wherein the pressure surface edge is axially shorter than the suction surface edge such that the downstream edge extends obliquely from the pressure surface edge to the suction surface edge, the swirl vane optionally being provided proximal or at the suction surface edge of the platform.

15. A gas turbine engine for an aircraft comprising:
an engine core comprising a turbine, a compressor assembly according to any one of claims 7 to 13, and a core shaft connecting the turbine to the compressor;
a fan located upstream of the engine core, the fan comprising a plurality of fan blades; and
wherein, optionally:
the gas turbine engine has an overall pressure ratio greater than 40; and/or
the gas turbine engine further comprises a gearbox that receives an input from the core shaft (26) and outputs drive to the fan so as to drive the fan at a lower rotational speed than the core shaft,
